# EUROPÄISCHE PATENTSCHRIFT

(11) **EP 2 313 213 B1**
(45) Veröffentlichungstag und Bekanntmachung des Hinweises auf die Patenterteilung: **31.07.2013**
(21) Anmeldenummer: 09777664.5
(22) Anmeldetag: 05.08.2009
(51) Int. Cl.: B21B 31/07, F16J 15/32

(54) **DICHTUNGSELEMENT ZUR ABDICHTUNG EINES WALZENLAGERS, WALZENLAGER UND VERFAHREN ZUM MONTIEREN DES DICHTUNGSELEMENTES**
SEALING ELEMENT FOR SEALING A ROLLING BEARING, ROLLING BEARING AND METHOD FOR MOUNTING THE SEALING ELEMENT
ÉLÉMENT D'ÉTANCHÉITÉ POUR RENDRE ÉTANCHE UN ROULEMENT À ROULEAUX, ROULEMENT À ROULEAUX ET PROCÉDÉ DE MONTAGE DE L'ÉLÉMENT D'ÉTANCHÉITÉ

(30) Priorität: 08.08.2008 DE 102008038997
(43) Veröffentlichungstag der Anmeldung: 27.04.2011
(73) Patentinhaber: SMS Siemag AG, 40237 Düsseldorf (DE)
(72) Erfinder: KELLER, Karl, 57271 Hilchenbach (DE)
(74) Vertreter: Klüppel, Walter
(86) Internationale Anmeldenummer: PCT/EP2009/005661
(87) Internationale Veröffentlichungsnummer: WO 2010/015392

(56) Entgegenhaltungen:
- EP-A1- 1 625 897
- DE-A1- 10 113 593
- DE-A1- 10 113 869
- US-A- 3 980 309
- US-A- 4 898 479

## Beschreibung

Die Erfindung betrifft ein Walzenlager mit einem Dichtungselement zur Abdichtung des Walzenlagers gegenüber dem Walzenzapfen einer Walze, wobei das Dichtungselement umfasst:
- einen ersten walzenzapfenfernen Teil in einer umlaufenden Nut in dem Walzenlager; und
- und einen zweiten walzenzapfennahen Teil in Form einer Dichtlippe, die an dem Walzenzapfen anliegt.

Die Erfindung betrifft weiterhin ein Verfahren zum Montieren des Walzenlagers.

Aus der DE 101 13 593 A1 ist eine Dichtungsvorrichtung für Walzenlager bekannt, bei der auf dem Walzenzapfen einer Walze eine Zapfenbuchse mit einer Zapfenbuchsenverlängerung drehfest angeordnet ist. Die Zapfenbuchsenverlängerung ist mit einem Dichtungselement ausgebildet, das den Spalt zwischen der Zapfenbuchsenverlängerung und der Oberfläche des Übergangsbereiches zwischen Walzenzapfen und Walze verschließt. Dadurch wird ein Eindringen von Fremdkörpern, beispielsweise Fühlmittel oder Walzensinter, und ein Austreten von Öl der Schmierung sowie von ggf. vorhandenem Abrieb aus Verschleiß zwischen den Walzenzapfen bzw. den Walzenkegel und die Zapfenbuchse verhindert. Das dargestellte Dichtungselement besitzt einen kreisrunden Querschnitt und ist in einer auf der Zapfenbuchsenverlängerung umlaufend angeordneten Nut angeordnet.

Eine ähnliche Ausführung ist aus der DE 101 13 869 A1 bekannt.

In einer Informationsbroschüre mit dem Titel " MORGOIL® Roll Neck Bearings " und in einem " NEWStetter SMS metallurgy", Herausgeber ist jeweils die Firma SMS Demag, ist eine Dichtungsvorrichtung offenbart, bei der das Dichtungselement eine rechteckige Kontur besitzt und in einer korrespondierenden Nut in der Zapfenbuchsenverlängerung angeordnet ist. Durch eine von der Nut in der Zapfenbuchsenverlängerung angeordnet ist. Durch eine von der rechteckigen Kontur des Dichtungselementes abstehenden Dichtlippe wird der Spalt zwischen Zapfenbuchsenverlängerung und Übergangsbereich verschlossen.

Bei der Montage und Demontage des Walzenlagers, speziell beim Aufschieben und Abziehen der Zapfenbuchsen mit der daran befestigten Zapfenbuchsenverlängerung von dem Walzenzapfen, kann die Position des Dichtungselementes verändert werden. Das beispielsweise aus Gummi hergestellte Dichtungselement haftet mit seiner Dichtlippe an der Oberfläche des Übergangsbereiches und wird dadurch aus der umlaufenden Nut der Zapfenbuchsverlängerung gezogen. Das Herausziehen des Dichtungselementes kann sowohl auf dem gesamten Umfang erfolgen - beim Anhaften der Dichtungslippe - als auch in einem kleinen Bereich, wenn die Zapfenbuchse beim Aufschieben oder beim Abziehen keinen umlaufenden Spalt aufweist, sondern in einem Bereich aufliegt. An dieser Stelle wird das Dichtungselement geklemmt und aus der Nut gezogen.

Der Erfindung liegt daher die Aufgabe zugrunde, ein Walzenlager mit einem Dichtungselement so zu gestalten, dass das Dichtungselement ortsfest in der Nut verbleibt, aber einfach ausgetauscht werden kann.

Diese Aufgabe wird erfindungsgemäß gelöst durch eine Rasteinrichtung mit einem walzenlagerseitigen Teil in der umlaufenden Nut und mit einem dichtungsseitigen Teil in dem walzenzapfenfemen Teil des Dichtungselementes zum Verrasten des walzenzapfenfemen Teils des Dichtungselementes mit dem walzenlagerseitigen Teil in der umlaufenden Nut.

Durch diese Ausgestaltung der Nut und erstem walzenzapfenfemen Teil des Dichtungselementes wird eine formschlüssige Verbindung erreicht, ohne zusätzliche Halteelemente einzusetzen. Das Dichtungselement wird in die Nut eingerastet bzw. eingeklickt, wodurch eine bessere Halterung / eine ortsfeste Verankerung des Dichtungselementes in der umlaufenden Nut erreicht wird.

Eine bevorzuge Ausgestaltung der Erfindung sieht vor, dass die Rasteinrichtung aus einer Erhebung und einer Vertiefung besteht, welche miteinander in Eingriff stehen. Durch eine derartige Ausgestaltung wird erreicht, dass die Erhebung und die Vertiefung genau aufeinander abgestimmt sind, wie Schloss und Schlüssel.

Eine besondere Ausgestaltung sieht vor dass die Erhebung in dem ersten walzenzapfenfemen Teil an seiner walzennahen Seite und/oder seiner walzenfernen Seite und die Vertiefung in der walzenfernen Seite oder der walzennahen Seite der Nut ausgebildet ist. Durch eine Anordnung der Rasteinrichtung an. diesen Stellen wird ein besonders einfaches und schnellen einlegen und verrasten bzw. ein einfaches und schnelles lösen und herausnehmen erreicht, dass durch die Elastizität des Dichtungselementes über die Breite beeinflusst wird.

In Weiterbildung dieser Bauweise wird vorgeschlagen, dass die Vertiefung als Ringnut und/oder die Erhebung als Ringwulst ausgebildet ist. Durch eine derartige Gestaltung werden das Einbauen und das Ausbauen vereinfacht, da ein gleichförmiger Übergang vorliegt. Das Einbauen bzw. Einrasten des Dichtungselementes wird insbesondere durch das Vorsehen eines nach innen gerichteten kegelförmigen Auslaufs an der Ringwulst vereinfacht.

Eine andere Vereinfachung wird außerdem auch dadurch erzielt, dass an der Seitenwand der Nut eine Erhebung vorgesehen ist, die die gleiche Form und die gleichen Maße wie die Vertiefung des ersten walzenzapfenfemen Teils des Dichtungselementes aufweist.

Der erste walzenzapfenfeme Teil und der zweite walzenzapfennahe Teil des Dichtungselementes sind einteilig ausgebildet. Dem steht nicht entgegen, dass unterschiedliche Materialien für die Klemmung in der Nut und die Dichtlippen verwendet werden können.

Als weitere Ausgestaltung wird vorgeschlagen, dass das Walzenlager eine Zapfenbuchse und eine daran befestigte Zapfenbuchsenverfängerung aufweist und dass die umlaufende Nut in der Zapfenbuchsenverlängerung ausgebildet ist. Durch die Gestaltung des Walzenlagers in zwei Bauteile wird ermöglicht, die Nut in nur eines der separaten Bauteile, insbesondere die Zapfenbuchsenverlängerung, einzubringen. Bei einer Änderung an der Nut muss dann nur die Zapfenbuchsenverlängerung ersetzt werden. Umgekehrt muss bei einem Ersatz der Zapfenbuchse die Zapfenbuchsenverlängerung mit der Nut nicht erneuert werden.

Die gestellte Aufgabe wird weiterhin gelöst durch ein Verfahren, mit Merkmalen von Anspruch 10.

Die Vorteile des beanspruchten Verfahrens entsprechen den oben mit Bezug auf das Walzenlager genannten Vorteilen. Insbesondere wird durch die beanspruchten Lösungen eine bessere Halterung bzw. eine ortsfeste Verankerung des Dichtungselementes in der Nut des Walzenlagers erreicht.

Weitere vorteilhafte Ausgestaltungen des Walzenlagers und des Verfahrens sind Gegenstand der abhängigen Ansprüche.

Der Beschreibung sind zwei Figuren beigefügt, wobei
- Fig. 1: einen Querschnitt durch ein Walzenlager mit einem erfindungsgemäßen Dichtungselement aufgeschoben auf den Zapfen einer Walze; und
- Fig. 2: einen Querschnitt durch ein Walzenlager mit dem erfindungsgemäßen Dichtungselement nach einem ersten Montageschritt;
zeigt.

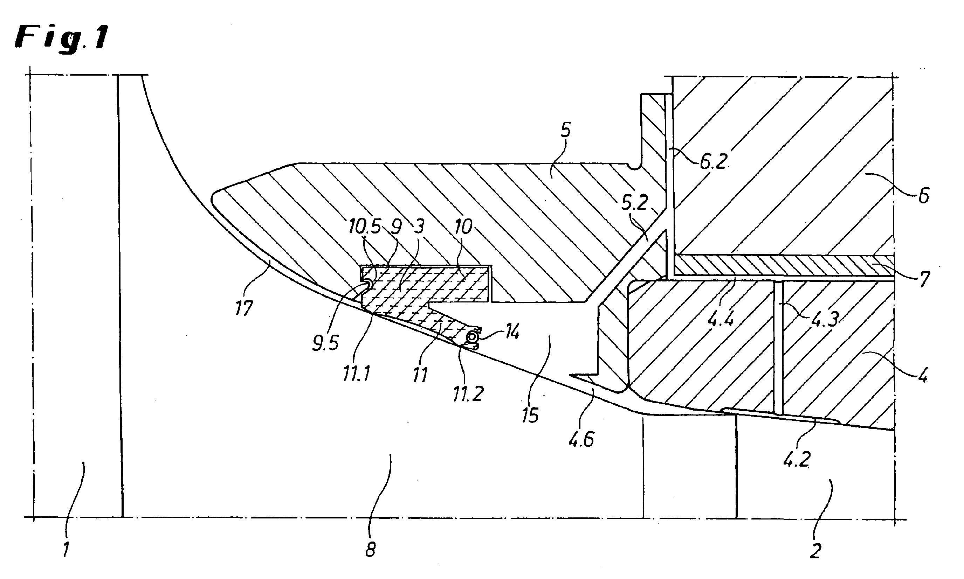

Figur 1 zeigt einen Querschnitt durch eine Walze 1 mit einem Walzenzapfen 2. Auf den Walzenzapfen 2 ist ein Dichtungselement 3 in Verbindung mit einer Zapfenbuchse 4 und einer Zapfenbuchsenverlängerung 5, die drehfest auf den Walzenzapfen 2 aufgebracht sind, aufgeschoben. Der Walzenzapfen 2 mit der drehfest auf ihm aufgebrachten Zapfenbuchse 4 ist in einem Lagergehäuse 6 mit Lagerbuchse 7 drehbar gelagert. Zwischen der sich relativ zu der Lagerbuchse 7 drehenden Zapfenbuchse 4 und der Lagerbuchse ist ein Ölfilm in dem Spalt 4.4 ausgebildet. Eine derartige Lagerung wird typischerweise in einem Walzgerüst (nicht dargestellt) eingesetzt, wobei die Walze zum Walzen vom Stahl und Nichteisenmetallen verwendet wird.

In montiertem Zustand ist das Dichtungselement 3 zwischen Zapfenbuchsenverlängerung 5 und dem Walzenzapfen 2 bzw. einem Übergangsbereich 8, der sich zwischen der Walze 1 und dem Walzenzapfen 2 erstreckt, positioniert. Das Dichtungselement ist typischerweise ringförmig ausgebildet und ist - in montiertem Zustand - vorzugsweise mit Hilfe einer Ringfeder 14 auf den Zapfen 2 bzw. den Übergangsbereich 8 angedrückt. Zur Aufnahme des Dichtungselementes 3 ist die Zapfenbuchsenverlängerung 5 mit einer Nut 9 ausgebildet. In die Nut 9 ist ein erster walzenzapfenferner Teil 10 des Dichtungselementes 3 eingerastet, während ein zweiter walzenzapfennaher Teil 11 des Dichtungselementes 3, der beispielsweise mit einer oder zwei Dichtlippen 11.1, 11.2 ausgebildet ist, an dem Walzenzapfen anliegt. Der erste walzenzapfenfeme Teil 10 des Dichtungselementes 3 zeigt im Querschnitt die Form eines Rechtecks. Dieser Form und den entsprechenden Maßen angepasst ist die Nut 9 ausgebildet.

Der erforderliche Ölfilm zwischen der Lagerbuchse 7 und der Zapfenbuchse 4 in dem Spalt 4.4 wird von einer Ölzuführung zum Gleitlager gespeist (nicht in Figur 1 sichtbar). Die Öltaschen 4.2 werden über die Bohrungen 4.3 gespeist, weil Öldruck im Spalt 4.4 größer ist als in den Taschen 4.2. Aus der Öltasche 4.2 diffundiert Öl während des Betriebs des Walzenlagers in den Ringraum 15. Von dort kann das Öl über die Kanäle 5.2 und 6.2 radial abfließen.

Das Dichtungselement 3 dient zum Abdichten des Ringraumes 15 gegen einen Ringspalt 17. Insbesondere verhindert das Dichtungselement 3 und dessen walzenzapfennaher Teil 11, das Eindiffundieren von Öl aus dem Ringraum 15 in den Ringspalt 17.

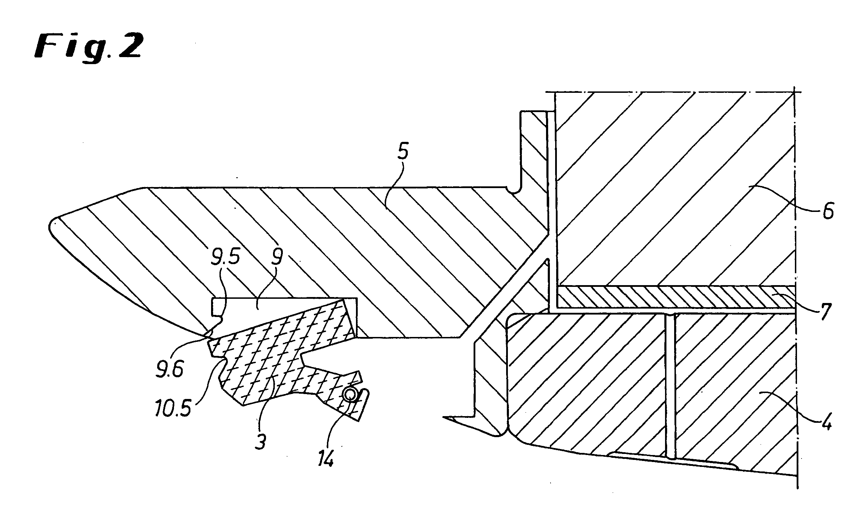

Die Montage des Dichtungselementes 3 in das Walzenlager gliedert sich im Prinzip in zwei Schritte:
1) Einsetzen des Dichtungselementes in eine umlaufende Nut 9 des Walzenlagers; siehe Fig. 2, und 2) Verrasten des Dichtungselementes 3 in der umlaufenden Nut 9.

In Schritt 1) wird das Dichtungselement zunächst nur an einer Stelle der umlaufenden Nut 9 in dem Walzlager, insbesondere in dessen Zapfenbuchsenverlängerung, eingesetzt. Nachfolgend wird in Schritt 2) das Dichtungselement 3 an dieser einen Stelle verrastet, vorzugsweise durch Eindrücken von Hand. Anschließend werden von dieser Stelle aus, vorzugsweise nach beiden Seiten entlang des Umfangs fortlaufend, immer mehr Abschnitte des Dichtungselementes 3 in die Nut eingerastet, bis schließlich das gesamte Dichtungselement entlang der gesamten umlaufenden Nut eingerastet ist.

## Patentansprüche

1. Walzenlager (4-7) zum Aufnehmen des Walzenzapfens (2) einer Walze (1), wobei das Walzenlager (4-7) aufweist:
eine umlaufende Nut (9); und
ein Dichtungselement (3) zum Abdichten des Walzenlagers gegenüber dem Walzenzapfen, wobei das Dichtungselement einen walzenzapfenfemen Teil (10) in der umlaufenden Nut (9) des Walzenlagers und einen walzenzapfennahen Teil (11) mit mindestens einer Dichtlippe (11.1, 11.2) aufweist, die an dem Walzenzapfen anliegt;
**gekennzeichnet durch**
eine Rasteinrichtung mit einem walzenlagerseitigen Teil (9.5) in der umlaufenden Nut (9) und mit einem dichtungsseitigen Teil (10.5) in dem walzenzapfenfemen Teil (10) des Dichtungselementes zum Verrasten des walzenzapfenfemen Teils (10) des Dichtungselementes mit dem walzenlagerseitigen Teil (9.5) in der umlaufenden Nut (9).

2. Walzenlager nach Anspruch 1,
**dadurch gekennzeichnet**
**dass** der walzenlagerseitige Teil (9.5) der Rasteinrichtung an der walzenfornen und/oder der walzennahen Seite der Nut (9) und der dichtungsseitige Teil (10.5) der Rasteinrichtung an der walzennahen und/oder der walzenfernen Seite (12) des walzenzapfenfernen Teils (10) des Dichtungselementes ausgebildet ist.

3. Walzenlager nach einem der Ansprüche 1 oder 2,
**dadurch gekennzeichnet,**
**dass** der dichtungsseitige Teil (10.5) der Rasteinrichtung aus einer Erhebung und der walzenlagerseitige Teil aus einer Vertiefung oder umgekehrt besteht, welche miteinander in Eingriff stehen.

4. Walzenlager nach Anspruch 3,
**dadurch gekennzeichnet,**
**dass** die Vertiefung als Ringnut ausgebildet ist.

5. Walzenlager nach einem der Ansprüche 3 oder 4,
**dadurch gekennzeichnet,**
**dass** die Erhebung als Ringwulst ausgebildet ist.

6. Walzenlager nach Anspruch 5,
**dadurch gekennzeichnet,**
**dass** die Ringwulst mit einem kegelförmigen Auslauf (9.6) nach innen ausgebildet ist.

7. Walzenlager nach einem der vorangegangenen Ansprüche,
**dadurch gekennzeichnet,**
**dass** das Walzenlager eine Zapfenbuchse (4) und eine daran befestigte Zapfenbuchsenverlängerung (5) ist; und
**dass** die umlaufende Nut (9) in der Zapfenbuchsenverlängerung (5) ausgebildet ist.

8. Walzenlager nach Anspruch 1,
**dadurch gekennzeichnet,**
**dass** das erste walzenzapfenferne Teil (10) und das zweite walzenzapfennahe Teil (11) des Dichtungselementes (3) einteilig ausgebildet sind.

9. Walzenlager nach Anspruch 1,
**dadurch gekennzeichnet,**
**dass** das erste waizenzapfenferne Teil (10) und das zweite walzenzapfennahe Teil (11) aus unterschiedlichen Materialien bestehen.

10. Verfahren zum Montieren eines Dichtungselementes in ein Walzenlager nach einem der Ansprüche 1 bis 9, mit den Schritten:
1) Einsetzen des Dichtungselementes in eine umlaufende Nut (9) des Walzenlagers;
**gekennzeichnet durch**
2) Verrasten des Dichtungselementes in der umlaufenden Nut (9).

11. Verfahren nach Anspruch 10,
**dadurch gekennzeichnet,**
**dass** in Schritt 1) das Dichtungselement zunächst nur an einer Stelle der umlaufenden Nut in dem Walzlager, insbesondere in dessen Zapfenbuchsenverlängerung (5), eingesetzt wird;
**dass** nachfolgend in Schritt 2) das Dichtungselement (3) an dieser einen Stelle verrastet wird, vorzugsweise durch Eindrücken von Hand; und dass anschließend von dieser Stelle aus, vorzugsweise nach beiden Seiten entlang des Umfangs fortlaufend, immer mehr Abschnitte des Dichtungselementes in die Nut (9) eingerastet werden, bis schließlich das gesamte Dichtungselement entlang der gesamten umlaufenden Nut eingerastet ist.

## Claims

1. Roll bearing (4-7) for mounting the roll pin (2) of a roll (1), wherein the roll bearing (4-7) comprises:
an encircling groove (9); and
a sealing element (3) for sealing the roll bearing relative to the roll pin, wherein the sealing element comprises a part (10), which is remote from the roll pin, in the encircling groove (9) of the roll bearing and a part (11), which is near the roll pin, with at least one sealing lip (11.1, 11.2) bearing against the roll pin;
**characterised by** a detent device with a part (9.5), which is at the roll bearing side, in the encircling groove (9) and with a part (10.5) which is at the seal side, in the part (10), which is remote from the roll pin, of the sealing element for detenting the part (10), which is remote from the roll pin, of the sealing element with the part (9.5), which is at the side of the roll bearing, in the encircling groove (9).

2. Roll bearing according to claim 1, **characterised in that** the part (9.5), which is at the roll bearing side, of the detent device is formed at the side, which is remote from the roll and/or near the roll, of the groove (9) and the part (10.5), which is at the seal side, of the detent device is formed at the side (12), which is near the roll and/or remote from the roll, of the part (10), which is remote from the roll pin, of the sealing element.

3. Roll bearing according to one of claims 1 and 2, **characterised in that** the part (10.5), which is at the seal side, of the detent device consists of an elevation and the part, which is at the roll bearing side, consists of a depression or, conversely, the detent device and depression being in engagement with one another.

4. Roll bearing according to claim 3, **characterised in that** the depression is formed as annular groove.

5. Roll bearing according to one of claims 3 and 4, **characterised in that** the elevation is formed as an annular bead.

6. Roll bearing according to claim 5, **characterised in that** the annular bead is formed inwardly with a conical run-out (9.6).

7. Roll bearing according to any one of the preceding claims, **characterised in that** the roll bearing is a pin bush (4) and a pin bush extension (5) fastened thereto, and that the encircling groove (9) is formed in the pin bush extension (5).

8. Roll bearing according to claim 1, **characterised in that** the first part (10), which is remote from the roll pin, and the second part (11), which is near the roll pin, of the sealing element (3) are of integral construction.

9. Roll bearing according to claim 1, **characterised in that** the first part (10), which is remote from the roll pin, and the second part (11), which is near the roll pin, consist of different materials.

10. Method of mounting a sealing element in a roll bearing according to any one of claims 1 to 9, comprising the steps:
1) insertion of the sealing element in an encircling groove (9) of the roll bearing; **characterised by**
2) detenting the sealing element in the encircling groove (9).

11. Method according to claim 10, **characterised in that** in step 1) the sealing element is initially inserted only at one place of the encircling groove in the roll bearing, in particular in the pin bush extension (5) thereof;
that subsequently in step 2) the sealing element (3) is detented at this one place, preferably by manually pressing into place; and
that subsequently from this place ever more sections of the sealing element are detented in the groove (9), preferably on both sides along the circumference, until ultimately the entire sealing element is detented along the entire encircling groove.

## Revendications

1. Roulement à rouleaux (4-7) pour la réception du tourillon de cylindre (2) d'un cylindre (1), le roulement à rouleaux (4-7) présentant :
une rainure périphérique (9) ; et
un élément d'étanchéisation (3) pour l'étanchéisation du roulement à rouleaux par rapport au tourillon de cylindre, l'élément d'étanchéisation présentant une partie éloignée du tourillon de cylindre (10) dans la rainure périphérique (9) du roulement à rouleaux et une partie proche du tourillon de cylindre (11) comprenant au moins une lettre d'étanchéité (11.1, 11.2) qui vient s'appliquer contre le tourillon de cylindre ;
**caractérisé par** un mécanisme d'encliquetage comprenant une partie (9.5) du côté du roulement à rouleaux dans la rainure périphérique (9) et une partie (10.5) du côté étanchéité dans la partie éloignée du tourillon de cylindre (10) de l'élément d'étanchéisation pour l'encliquetage de la partie éloignée du tourillon de cylindre (10) de l'élément d'étanchéisation avec la partie (9.5) du côté du roulement à rouleaux dans la rainure périphérique (9).

2. Roulement à rouleaux selon la revendication 1, **caractérisé en ce que** la partie (9.5) du côté du roulement à rouleaux du mécanisme d'encliquetage est réalisée contre le côté de la rainure (9) éloigné du cylindre et/ou proche du cylindre et la partie (10.5) du mécanisme d'encliquetage du côté étanchéité est réalisée contre le côté (12) de la partie éloignée du tourillon de cylindre (10) de l'élément d'étanchéisation, proche du cylindre et/ou éloignée du cylindre.

3. Roulement à rouleaux selon la revendication 1, **caractérisé en ce que** la partie (10.5) du mécanisme d'encliquetage du côté étanchéité est constituée d'une élévation et la partie du côté du roulement à rouleaux est constituée d'un renfoncement, ou inversement, qui entre en engrènement réciproque.

4. Roulement à rouleaux selon la revendication 3, **caractérisé en ce que** le renfoncement est réalisé sous la forme d'une rainure annulaire.

5. Roulement à rouleaux selon l'une quelconque des revendications 3 ou 4, **caractérisé en ce que** l'élévation est réalisée sous la forme d'un bourrelet annulaire.

6. Roulement à rouleaux selon la revendication 5, **caractérisé en ce que** le bourrelet annulaire est réalisé avec une sortie cunéiforme (9.6) orientée vers l'intérieur.

7. Roulement à rouleaux selon l'une quelconque des revendications précédentes, **caractérisé en ce que** le roulement à rouleaux est un coussinet (4) et un prolongement de coussinet (5) qui y est fixé ; et **en ce que** la rainure périphérique (9) est réalisée dans le prolongement de coussinet (5).

8. Roulement à rouleaux selon la revendication 1, **caractérisé en ce que** la première partie éloignée du tourillon de cylindre (10) et la deuxième partie proche du tourillon de cylindre (11), de l'élément d'étanchéisation (3) sont réalisées en une seule pièce.

9. Roulement à rouleaux selon la revendication 1, **caractérisé en ce que** la première partie éloignée du tourillon de cylindre (10) et la deuxième partie proche du tourillon de cylindre (11), de l'élément d'étanchéisation (3) sont constituées par des matières différentes.

10. Procédé pour le montage d'un élément d'étanchéisation dans un roulement à rouleaux selon l'une quelconque des revendications 1 à 9, comprenant les étapes consistant à :
1) introduire l'élément d'étanchéisation dans une rainure périphérique (9) du roulement à rouleaux ;
**caractérisé par**
2) l'encliquetage de l'élément d'étanchéisation dans la rainure périphérique (9).

11. Procédé selon la revendication 10, **caractérisé en ce que**, à l'étape 1), l'élément d'étanchéisation est d'abord inséré uniquement à un endroit de la rainure périphérique dans le roulement à rouleaux, en particulier dans son prolongement de coussinet (5) ; **en ce qu'**on procède ensuite à l'étape 2) à l'encliquetage de l'élément d'étanchéisation (3) à ce premier endroit, de préférence en l'enfonçant à la main ; et **en ce que** ensuite, à partir de cet endroit, de préférence des deux côtés sur toute la longueur de la périphérie, on procède à l'encliquetage d'un nombre toujours supérieur de tronçons de l'élément d'étanchéisation dans la rainure (9) jusqu'à ce que l'on obtienne en définitive l'encliquetage de la totalité de l'élément d'étanchéisation sur toute la longueur de la rainure périphérique.
